# EUROPEAN PATENT SPECIFICATION

(11) **EP 3 309 862 B1**
(45) Date of publication and mention of the grant of the patent: **03.04.2019**
(21) Application number: 17195281.5
(22) Date of filing: 06.10.2017
(51) Int. Cl.: H01M 2/10

(54) **SHOULDERING TYPE POWER SUPPLY DEVICE**
STROMVERSORGUNGSVORRICHTUNG ZUM SCHULTERN
DISPOSITIF D'ALIMENTATION DE PUISSANCE DE TYPE SHOULDERING

(30) Priority: 11.10.2016 JP 2016200338
(43) Date of publication of application: 18.04.2018
(73) Proprietor: Yamabiko Corporation, Ohme-shi, Tokyo 198-8760 (JP)
(72) Inventor: KODAMA, Hisao, Tokyo, 198-8760 (JP); MOMIYAMA, Hiroshi, Tokyo, 198-8760 (JP)
(74) Representative: Chapman IP

(56) References cited:
- EP-A1- 3 065 199
- CN-A- 102 263 217
- US-A1- 2013 162 055

## Description

### FIELD OF THE INVENTION

The invention relates to a shouldering type power supply device.

### DESCRIPTION OF THE RELATED ART

Work machines such as electric blowers and cutting machines are expected to have a large capacity battery for a longer battery life. To meet such a demand, shouldering type power supply devices having a large capacity battery are used. A worker carries the shouldering type power supply device on the worker's back to operate the work machine for a longer time.

The above-mentioned shouldering type power supply device includes a battery case mounted with a battery and a carrier having shoulder belts, in which the front surface of the battery case is fixed on the carrier with a plurality of screws (see Patent Document 1 for example).

Further, in the shouldering type power supply device described above, a cord hole is formed on the front surface of the battery case, and guide grooves extending in the right and left direction are defined on both the right and left sides of the cord hole.

A power cord is inserted through the cord hole and is fitted in one of the right and left guide grooves so as to be drawn out to the right or left side of the battery case.

In the structure, the power cord is drawn out from the battery case in correspondence with the position of the work machine with respect to the worker when the worker carries the work machine. Therefore, the power cord does not disturb the operation by the worker.

### PRIOR ART DOCUMENT

### PATENT DOCUMENT

Patent Document 1: Japanese Patent Application Publication No. 2014-29660

US2013/0162055 discloses a shouldering type power supply device for supplying electric power to a working machine, the device comprising a battery case housing a battery, a power cord for detachably electrically connecting the battery and the working machine to supply electric power to the working machine from the battery, and a carrier to which the battery case is detachably attached, the carrier comprising a backplate, a shoulder belt coupled to the backplate, the battery case comprising a case body that houses the battery and a terminal case that is attached on the top surface of the case body, wherein the terminal case has a cord hole having an opening at a front side, a right guide part disposed on a right side of the chord hole at the front of the terminal case and a left guide part disposed on the left side of the cord hole at a front of a terminal case, wherein the power cord has an end part detachably connected to the battery, the power cord extending forwardly through the cord hole and being bent either to the right side or the left side at a front of the cord hole and is held by the right or left guide part, and the power cord being capable of being taken out from the guide part.

CN102263217 discloses a shouldering power supply device comprising a box-like case housing batteries that is attachable to a support frame structure having a back plate to which shoulder belts are attached. The bottom of the frame comprises a bracket which supports the box-like battery case and fixing elements on the sides of the frame prevent the battery case from being dropped when carried by the device.

### SUMMARY OF THE INVENTION

In the shouldering type power supply device, when the direction of the power cord is changed, the screws with which the battery case is fixed on the carrier are taken off so that the worker can handle the power cord fitted in the guide groove. After the direction of the power cord is changed, the battery case needs to be fixed again on the carrier with the screws. Thus, in the shouldering type power supply device described above, a tool is used to screw and unscrew the screws on the battery case and the carrier. This causes a problem such that the operation of changing the direction of the power cord drawn out from the battery case is burdensome.

The present invention is intended to provide a shouldering type power supply device that allows for easily changing a direction of a power cord drawn out from a battery case without using a tool.

A shouldering type power supply device of the invention that solves the above problem has: a battery case that is mounted with a battery; and a carrier to which the battery case is detachably attached, wherein the carrier has: a back plate; and a shoulder belt that is coupled to the back plate, and the battery case has: a case body that houses the battery; and a terminal case that is attached on a top surface of the case body, wherein the terminal case has a cord hole on a front surface thereof, and in the side surface, a right guide part and a left guide part protruding on both right and left sides of the cord hole, wherein a power cord is inserted through the cord hole and is held between one of the guide parts and the top surface of the case body.

According to the shouldering type power supply device of the present invention, a worker can carry a large capacity battery in manner of putting a back plate of a carrier on the worker's back and hanging the shoulder belts on the worker's shoulders.

In the shouldering type power supply device of the present invention, when the direction of the power cord drawn out from the battery case is changed, the power cord is taken out from a space between one of the guide parts and the top surface of the case body and is held between the other guide part and the top surface of the case body. Thus, the direction of the power cord drawn out from the battery case is easily changed.

In the shouldering type power supply device of the present invention, the carrier preferably has a cover structure that is coupled to the back plate to cover the battery case with the cover structure for mounting the battery case in the carrier and protecting the battery case.

With the structure, when the direction of the power cord drawn out from the battery case is changed, the cover structure is taken out from the battery case to expose a terminal case, the direction of the power cord drawn out from the battery case is changed, and then, the battery case is covered with the cover structure.

In the shouldering type power supply device mentioned above, the cover structure preferably has an upper cover that covers an upper part of the battery case and a lower cover that covers a lower part of the battery case. Further, the upper cover is preferably made of an elastic body.

With the structure, the upper cover is elastic. Even if the shouldering type power supply device is fallen to the ground, as the upper cover reduces impact on the terminal cover and the power cord, that prevents the terminal cover and the power cord from being damaged.

In the shouldering type power supply device mentioned above, the cover structure is preferably attached on a rear surface of the back plate. Further, the upper cover has preferably a top plate, a rear plate that is arranged on a rear edge part of the top plate, and right and left side plates that are arranged on right and left edge parts of the top plate, and a front edge part of the top plate is attached on the rear surface of the back plate. Right and left guide holes are preferably defined between front edge parts of the respective side plates of the upper cover and the rear surface of the back plate, and the power cord is inserted through one of the guide holes.

With the structure, since the power cord is extended linearly from inside the upper cover to the outside via the guide hole, the power cord is easily drawn out from the upper cover.

Further, when the upper cover is tilted upward, the front edge parts of the side plates are separated away from the rear surface of the back plate to open the guide holes. Accordingly, the power cord is easily put in and taken out from the guide holes.

In the shouldering type power supply device mentioned above, fixing belts may be arranged on the right and left sides of the back plate to be detachably attached on outer surfaces of the side plates of the upper cover. In this case, each guide hole may be defined above the fixing belt as an opening defined by the upper cover, the back plate and the fixing belt, thereby the power cord inserted through the guide hole is stabilized.

In the shouldering type power supply device of the present invention, the power cord is held between one of the right and left guide parts and the top surface of the battery case. Accordingly, the direction of the power cord drawn out from the battery case is easily changed, without using a tool.

### BRIEF DESCRIPTION OF THE SEVERAL VIEWS OF THE DRAWINGS

Certain preferred embodiments of the present invention will now be described in greater detail by way of example only and with reference to the accompanying drawings, in which:
FIG. 1 is a perspective view of a shouldering type power supply device according to an embodiment of the present invention, which is viewed from a right upper point of the rear;
FIG. 2 is a perspective view of the shouldering type power supply device according to the embodiment of the present invention, which is viewed from a left upper point of the rear;
FIG. 3A is a view showing a battery case according to the embodiment of the present invention, which is a perspective view viewed from a left upper point of the rear;
FIG. 3B is a view showing the battery case according to the embodiment of the present invention, which is a rear view;
FIG. 4A is a view showing the battery case according to the embodiment of the present invention, which is a perspective view showing a power cord drawn out in a right direction;
FIG. 4B is a view showing the battery case according to the embodiment of the present invention, which is a perspective view showing the power cord drawn out in a left direction;
FIG. 5 is a perspective view of a carrier according to the embodiment of the present invention, which is viewed from a right upper point of the rear;
FIG. 6A is a view showing drop-prevention belts according to the embodiment of the present invention, which is a perspective view showing the drop-prevention belt on the left side;
FIG. 6B is a view showing the drop-prevention belts according to the embodiment of the present invention, which is a perspective view showing the drop-prevention belt on the right side;
FIG. 7A is a view showing an upper cover according to the embodiment of the present invention, which is a perspective view showing the power cord drawn out in the right direction;
FIG. 7B is a view showing the upper cover according to the embodiment of the present invention, which is a perspective view showing the power cord drawn out in the left direction;
FIG. 8A is a view showing a storage holder according to the embodiment of the present invention, which is a perspective view viewed from the right side;
FIG. 8B is a view showing the storage holder according to the embodiment of the present invention, which is a perspective view viewed from the left side;
FIG. 8C is a view showing the storage holder according to the embodiment of the present invention, which is a perspective view viewed from below the bottom;
FIG. 9A is a view showing the storage holder according to the embodiment of the present invention, which is a plan view; and
FIG. 9B is a view showing the storage holder according to the embodiment of the present invention, which is another plan view showing a folded state thereof.

### DETAILED DESCRIPTION OF THE INVENTION

An embodiment of the present invention will be described in detail appropriately with reference to the attached drawings.

In the following description, front-rear and left-right directions are set for the sake of convenience to explain a shouldering type power supply device in the embodiment of the present invention, so do not limit the structure of the shouldering type power supply device of the present invention.

### <Overall structure of shouldering type power supply device>

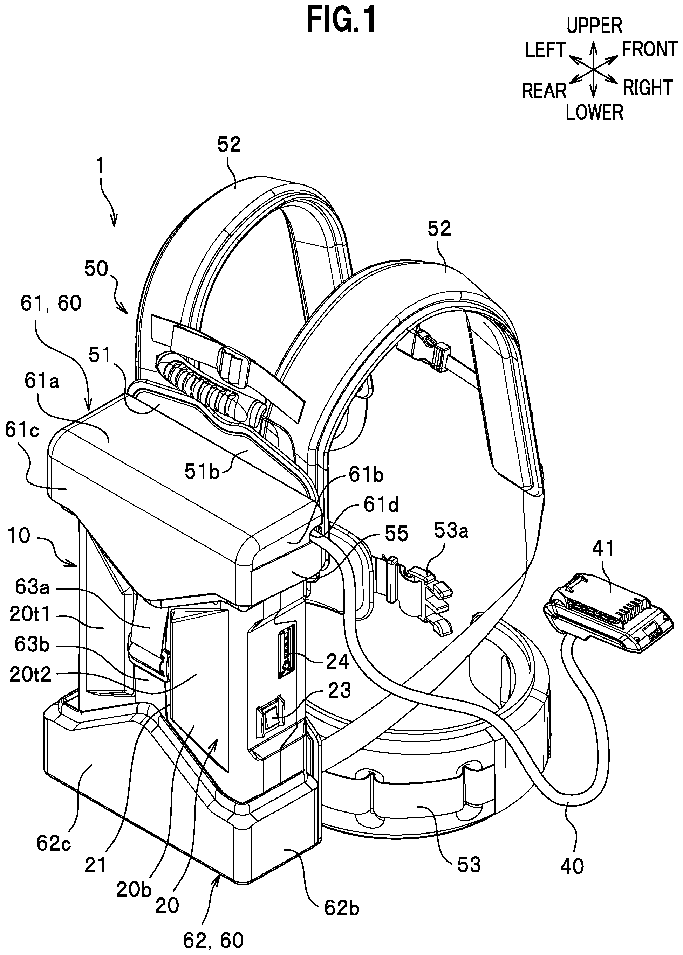

The shouldering type power supply device 1 in this embodiment is a device for supplying electric power to a working machine (not shown) like an electric blower or an electric trimmer as shown in FIG. 1. A worker can carry the shouldering type power supply device 1 on his back.

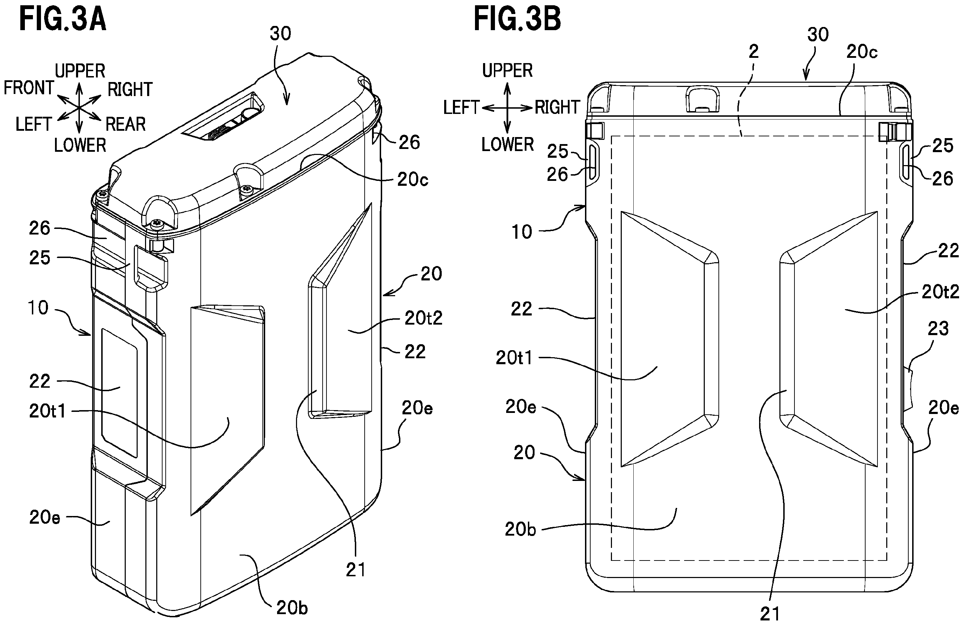

The shouldering type power supply device 1 comprises a battery case 10 housing a battery 2 (refer to FIG. 3B) and a carrier 50. The battery case 10 is attached to the carrier 50, and is detachable from the carrier 50.

### <Structure of battery case>

As shown in FIG. 3B, the battery case 10 comprises a case body 20 and a terminal case 30 disposed on a top surface 20c of the case body 20.

As shown in FIG. 3A, the case body 20 is a rectangular parallelepiped plastic box. A battery 2 (refer to FIG. 3B) having a large capacity, and a control circuit (not shown) are housed in the case body 20.

A groove 21 extending in an upper-lower direction is formed in a middle area of a rear surface 20b of the case body 20. The groove 21 is a part in which an upper belt 63a and a lower belt 63b of the carrier 50 to be described later in detail are put. The groove 21 has a space between a left side protrusion 20t1 and a right side protrusion 20t2. The protrusions 20t1 and 20t2 formed in projecting shape are provided on the rear surface 20b. Each of the protrusions 20t1 and 20t2 extends in the upper-lower direction. Furthermore, each cross sectional shape in a plane (horizontal plane) orthogonal to the extending direction (upper-lower direction) is a triangle. A side of each triangle, which is on the groove side, has a steeper inclination angle against the rear surface 20b than that of another side which is farther away from the groove 21.

A left side surface 20e and a right side surface 20e of the case body 20 have recessed parts 22, 22 recessed toward the inside of the case body 20 in the middle of the height thereof, respectively as shown in FIG. 3B.

A switch 23 and a display panel 24 are provided on a bottom surface of the recessed part 22 on the right side surface 20e as shown in FIG. 1. The switch 23 switches a supplying and a stopping of the electric power. The display panel 24 displays a residual amount of the electric power.

According to the above-mentioned structure, the switch 23 is positioned at a position recessed toward the inside of the case body 20 relative to upper and lower parts of the right side surface 20e, so neighboring members are hard to touch the switch 23 during moving or working.

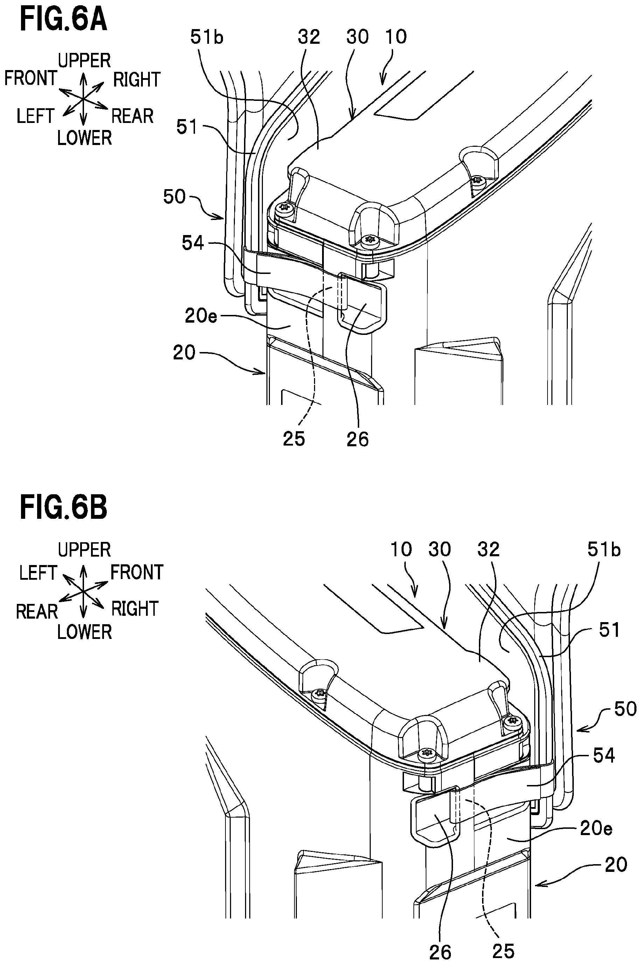

Fixing grooves 26, 26 extending in the front-rear direction are formed on upper parts of the left and right side surfaces 20e, 20e of the case body 20, respectively as shown in FIGS. 6A, 6B. A fixing part 25 is arranged approximately in a middle of each fixing groove 26 in the front-rear direction. A drop-prevention belt 54 to be described later is attached to each fixing part 25.

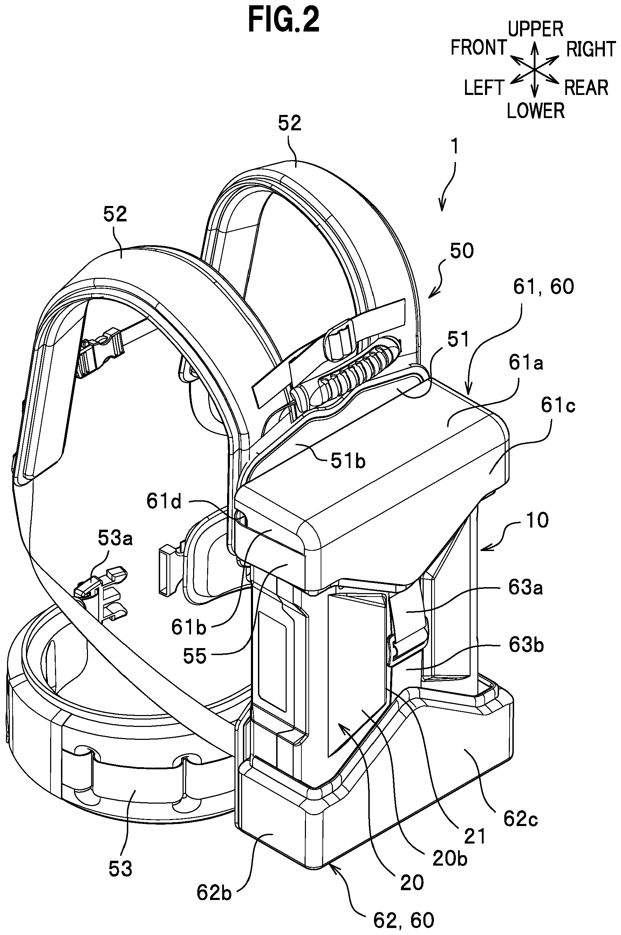

Each fixing part 25 and the corresponding fixing groove 26 are disposed in an area to be covered with an upper cover 61 to be described later when an upper part of the battery case 10 is covered with the upper cover 61, as shown in FIGS. 1 and 2.

Each fixing part 25 has a straight part extending in the upper-lower direction as shown in FIGS. 6A, 6B. Upper and lower ends of each fixing part 25 are connected to an upper wall part and a lower wall part defining the corresponding fixing groove 26, respectively.

Each fixing part 25 is away from a bottom surface of the corresponding fixing groove 26, and the corresponding drop-prevention belt 54 can be inserted between the bottom surface of the fixing groove 26 and the fixing part 25.

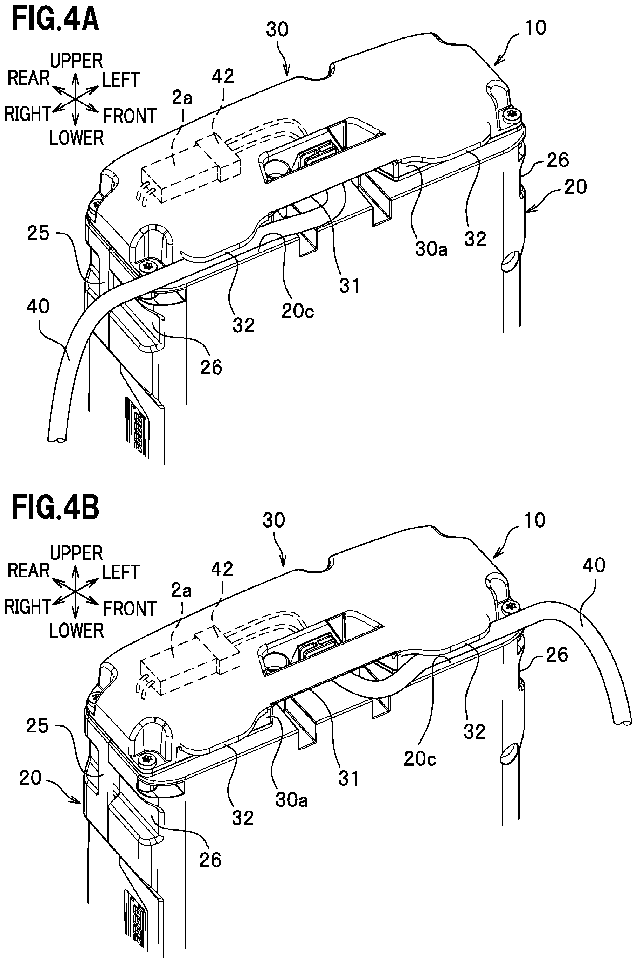

As shown in FIG. 4A, a plug type battery connector 2a, which is electrically connected to the control circuit (not shown) in the case body 20, is disposed on or above the top surface 20c of the case body 20. A cord connector 42 of a power cord 40 to be described later is connected to the battery connector 2a.

The terminal case 30 is attached to the top surface 20c of the case body 20. The terminal case 30 is a plastic vessel and has an opening which opens downward.

The terminal case 30 is fixed to the top surface 20c of the case body 20 with a plurality of screws. The top surface 20c of the case body 20 is covered with the terminal case 30. The battery connector 2a and the cord connector 42 are housed in the terminal case 30.

A cord hole 31 is formed in the middle of a front surface 30a of the terminal case 30 in the left-right direction. The power cord 40 is inserted through the cord hole 31.

As shown in FIG. 1, the power cord 40 has one end attached to the working machine (not shown) and the other end attached to the battery case 10, and has electric wires for transmitting the electric power to the working machine from the battery 2 in the battery case 10.

A terminal adapter 41, which is to be attached to the working machine, is provided at an end of the power cord 40. The terminal adapter 41 is detachably attached to a battery attachment part of the working machine.

The plug type cord connector 42 is equipped at the other end of the power cord 40 as shown in FIG. 4A.

The cord connector 42 is connected to the battery connector 2a in the terminal case 30.

When the power cord 40 is damaged, the power cord 40 can be changed in a manner of detaching the terminal case 30 from the case body 20 and then disconnecting the cord connector 42 from the battery connector 2a.

The shouldering type power supply device 1 of the present embodiment has the battery connector 2a and the cord connector 42 waterproofed by housing the connectors 2a, 42 in the terminal case 30, and dustproof is also performed for the connectors 2a, 42 by housing the connectors 2a, 42 in the terminal case 30. By this structure, both of the connectors 2a, 42 can be downsized compared to a case of using a connector having a waterproof structure. Therefore, the battery case 10 can be downsized.

Left and right guide parts 32, 32 at an upper edge of the front surface 30a of the terminal case 30 protrude forward. The left and right guide parts 32, 32 are located on the left side and the right side of the cord hole 31, respectively.

There is a space between an undersurface of each guide part 32 and a front end part of the top surface 20c of the case body 20. The power cord 40 is inserted in the space. That is, the power cord 40 is held between a guide part 32 and the top surface 20c of the case body 20. Thus, the power cord 40 is kept between one guide part 32 and the top surface 20c of the case body 20.

The power cord 40 shown in FIG. 4A extends forward through the cord hole 31, and is bent to the right at the top surface 20c of the case body 20, and then extends in the right direction along a front edge of the top surface 20c. That is, in FIG. 4A, the power cord 40 is drawn out of the right side of the battery case 10.

Like this, in a case where the power code 40 is drawn out of the right side of the battery case 10, the power cord 40 is held between the right guide part 32 and the top surface 20c of the case body 20, so that the power cord 40 can be guided toward the right side.

Note that, as shown in FIG. 4B, in a case where the power code 40 is drawn out of the left side of the battery case 10, the power cord 40 is held between the left guide part 32 and the top surface 20c of the case body 20, so that the power cord 40 can be guided toward the left side.

### <Structure of carrier>

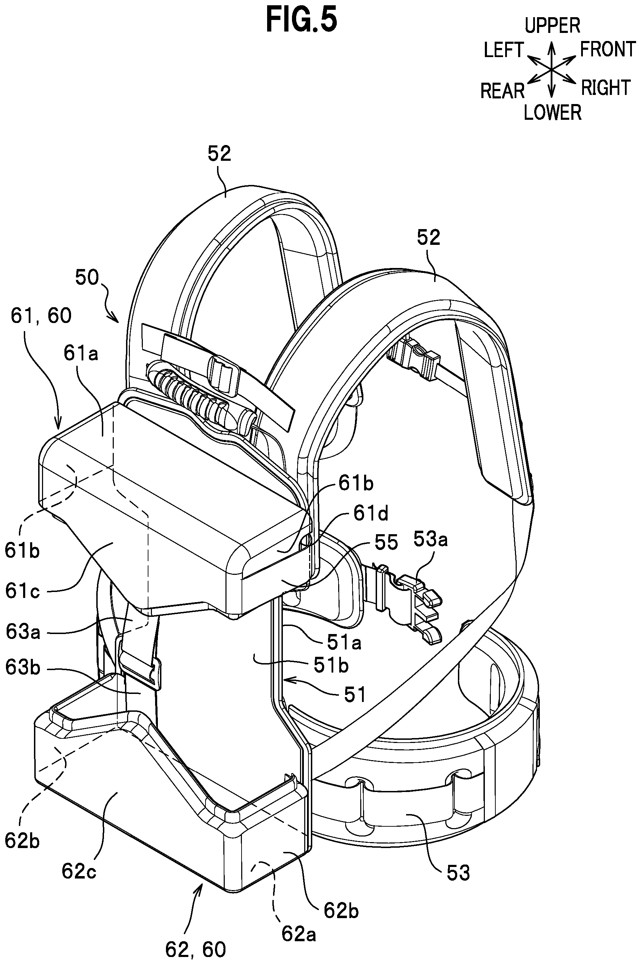

As shown in FIG. 5, the carrier 50 comprises a back plate 51, left and right shoulder belts 52, 52 connected to the back plate 51, a waist belt 53 connected to the back plate 51, and a cover structure 60 connected to the back plate 51.

The back plate 51 is an approximately rectangular plate to abut on a back of a worker when the worker carries the carrier 50 on his back, and is made of a plastic plate covered with a cloth material. The back plate 51 is formed so that a height thereof and a width thereof in the left-right direction are a little larger than a height and a width of the battery case 10 (refer to FIG. 1), respectively.

The left and right shoulder belts 52, 52 are hung on both shoulders of the worker when the worker carries the carrier 50. An upper end part of each shoulder belt 52 is fixed to an upper part of a front surface 51a of the back plate 51, and a lower end part of the shoulder belt 52 is fixed to a lower part of the front surface 51a of the back plate 51. The left and right shoulder belts 52, 52 are spaced apart from each other in the left-right direction.

The waist belt 53 is a belt to be wound around a waist of the worker when the worker carries the carrier 50. The waist belt 53 is fixed to a lower part of the front surface 51a of the back plate 51. Furthermore, a plug type buckle 53a is equipped to the waist belt 53.

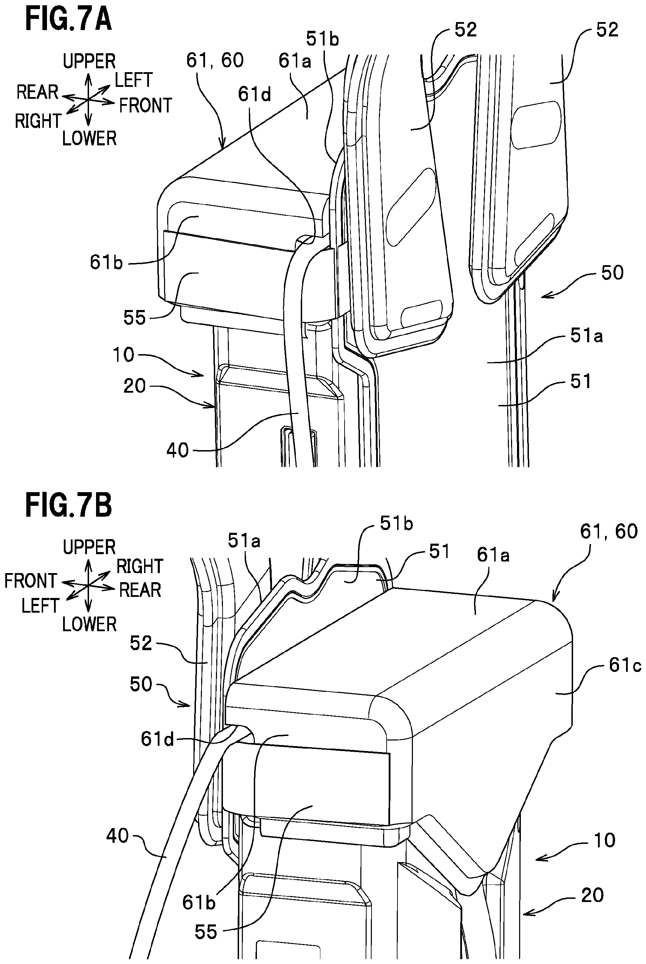

As shown in FIGS. 7A, 7B, a base part of each of fixing belts 55, 55 is fixed to an upper part of the corresponding left or right edge part of the back plate 51.

Both tip end parts of the fixing belts 55, 55 are detachably attached in a manner of hook and loop fastener to the upper cover 61 of the cover structure 60 to be described later in detail.

Bases of the drop-prevention belts 54, 54 are fixed to respective left and right upper edge parts of the back plate 51 as shown in FIGS. 6A, 6B. The drop-prevention belts 54, 54 are detachably attached to the respective fixing parts 25, 25 provided on the side surfaces 20e, 20e of the case body 20.

Each drop-prevention belt 54 is inserted in the corresponding fixing groove 26 from the front toward the rear and is positioned between the fixing part 25 and the bottom surface of the fixing groove 26. Furthermore, each drop-prevention belt 54 is folded back toward the front at the rearward position of the fixing part 25, and the tip end part of each drop-prevention belt 54 is detachably fixed to the base part of the drop-prevention belt 54 in a manner of hook and loop fastener. Like this, each drop-prevention belt 54 is wound around the corresponding fixing part 25.

Note that, when the upper cover 61 (refer to FIG. 1) covers the upper part of the battery case 10, the left and right drop-prevention belts 54, 54 are covered with the upper cover 61.

As shown in FIG. 1, the cover structure 60 is intended to hold the battery case 10, and comprises the upper cover 61 for covering an upper part of the battery case 10 and a lower cover 62 for covering a lower part of the battery case 10.

As shown in FIG. 5, the lower cover 62 is fixed onto a lower part of a rear surface 51b of the back plate 51. The lower cover 62 has a bottom plate 62a, side plates 62b, 62b uprising on left and right edge parts of the bottom plate 62a, and a rear plate 62c uprising on a rear edge part of the bottom plate 62a.

The bottom plate 62a, the side plates 62b, 62b and the back plate 62c are made of elastic plates having a cushioning characteristic such as a foamed polyethylene plate, and each plate is covered with the corresponding piece of cloth. That is, the overall lower cover 62 is a soft member which has elasticity. Furthermore, the lower cover 62 is a cushioning member which can absorb an impact.

Front edge parts of the bottom plate 62a and both the side plates 62b, 62b of the lower cover 62 are fixed onto the rear surface 51b of the back plate 51.

A housing space defined by the lower cover 62 and the back plate 51 is formed. The housing space is opened upwards, and the lower part of the battery case 10 (refer to FIG. 1) is inserted in the housing space to be fitted in the lower cover 62.

The upper cover 61 is attached onto an upper part of the rear surface 51b of the back plate 51. The upper cover 61 has a top plate 61a, left and right side plates 61b, 61b fixed onto and hanging down from left and right edge parts of the top plate 61a, and a rear plate 61c fixed onto and hanging down from a rear edge part of the top plate 61a.

The upper cover 61 as well as the lower cover 62 is a cushioning member made of an elastic material such as a foamed polyethylene.

A front edge part of the top plate 61a of the upper cover 61 is fixed onto the rear surface 51b of the back plate 51.

Both front edge parts of the left and right side plates 61b, 61b of the upper cover 61 are in contact with the rear surface 51b of the back plate 51. As shown in FIGS. 7A, 7B, the left and right fixing belts 55, 55 are detachably attached to outer surfaces of the respective side plates 61b, 61b in a manner of hook and loop fastener. Thus, the left and right side plates 61b, 61b of the upper cover 61 are fixed on the back plate 51 by the left and right fixing belts 55, 55.

Thus, as shown in FIG. 5, a housing space defined by the upper cover 61 and the back plate 51 is formed. Regarding the housing space, the upper cover 61 opens downward, and the upper part of the battery case 10 (refer to FIG. 1) is inserted in the housing space to be fitted in the upper cover 61.

When both the fixing belts 55, 55 (refer to FIGS. 7A, 7B) are detached from both the side plates 61b, 61b of the upper cover 61, only the front edge part of the top plate 61a is attached to the back plate 51. Thereby, the upper cover 61 can be tilted upward against the back plate 51. When the upper cover 61 is tilted upward against the back plate 51, the front edge parts of both the side plates 61b, 61b leave the rear surface 51b of the back plate 51.

The upper cover 61 covering the upper part of the battery case 10 can be taken off the upper part of the battery case 10 in a manner of tilting the upper cover 61 roughly in the upper-lower direction against the back plate 51 as mentioned above.

As shown in FIGS. 7A, 7B, left and right guide holes 61d, 61d are formed between the respective front edge parts of both the side plates 61b, 61b of the upper cover 61 and the rear surface 51b of the back plate 51. Each guide hole 61d is a space part in which the power cord 40 is inserted.

Each guide hole 61d is located above the corresponding fixing belt 55. Each guide hole 61d is an opening defined by the upper cover 61, the rear surface 51b of the back plate 51, and an upper edge part of the corresponding fixing belt 55.

When both fixing belts 55, 55 are detached from both the side plates 61b, 61b of the upper cover 61 and the upper cover 61 is tilted upward, the front edge parts of both the side plates 61b, 61b come off the rear surface 51b of the back plate 51. That is, both the guide holes 61d, 61d become opened. Thus, the power cord 40 can be inserted in and taken out from the corresponding guide hole 61d.

In a case where the power cord 40 is drawn out of the right side of the battery case 10, the power cord 40 is inserted in the right side guide hole 61d as shown in FIG. 7A. And furthermore, in a case where the power cord 40 is drawn out of the left side of the battery case 10, the power cord 40 is inserted in the left side guide hole 61d as shown in FIG. 7B.

As shown in FIG. 1, the cover structure 60 of the present embodiment has the upper cover 61 and the lower cover 62, and the two covers are separated from each other. The upper cover 61 and the lower cover 62 are spaced apart in the upper-lower direction from each other. Therefore, the battery case 10 is exposed between the upper cover 61 and the lower cover 62. The switch 23 of the battery case 10 and the display panel 24 for displaying a residual amount of the electric power are exposed between the upper cover 61 and the lower cover 62.

An upper belt 63a is provided at a lower edge part of the rear plate 61c of the upper cover 61 and extending downward. The upper belt 63a is located in the middle of the rear plate 61c in the left-right direction.

A lower belt 63b is equipped at an upper edge part of the rear plate 62c of the lower cover 62 and extending upward. The lower belt 63b is located in the middle of the rear plate 62c in the left-right direction.

A lower end part of the upper belt 63a and an upper end part of the lower belt 63b are detachably connected with each other with use of a buckle or hook and loop fastener.

The upper belt 63a and the lower belt 63b are located and housed in the groove 21 formed on the rear surface 20b of the case body 20 of the battery case 10.

### <Method of attaching and detaching battery case to and from carrier>

A procedure in which the battery case 10 is attached to the carrier 50 will be described for the shouldering type power supply device 1 of the present embodiment shown in FIG. 1.

First, according as a position where a working machine is located with respect to a worker is a left side or a right side of the worker when the worker has the working machine in his hand, a direction where the power cord 40 is drawn out of the battery case 10 is determined.

Next, in a case where the power cord 40 is drawn out of the right side of the battery case 10 as shown in FIG. 4A, the power cord 40 is guided to the right while holding the power cord 40 between the right guide part 32 and the top surface 20c of the case body 20.

In a case where the power cord 40 is drawn out of the left side of the battery case 10 as shown in FIG. 4B, the power cord 40 is guided to the left while holding the power cord 40 between the left guide part 32 and the top surface 20c of the case body 20.

Then, the lower part of the battery case 10 is put in the lower cover 62 while keeping a state in which the upper belt 63a and the lower belt 63b are disconnected from each other.

And then, as shown in FIGS. 6A, 6B, the left and right drop-prevention belts 54, 54 are attached to the respective left and right fixing parts 25, 25 of the battery case 10.

Note that, the upper cover 61 (refer to FIG. 1) is omitted in FIGS. 6A, 6B. The upper cover 61 is tilted upward when each drop-prevention belt 54 is attached to the corresponding fixing part 25 of the battery case 10.

Then, as shown in FIGS. 7A, 7B, the upper cover 61 covers over the top part of the battery case 10, and then, the left and right fixing belts 55, 55 are attached to the left and right side plates 61b, 61b of the upper cover 61, respectively.

At this time, in a case where the power cord 40 is drawn out of the right side of the battery case 10, the power cord 40 is inserted in the right guide hole 61d as shown in FIG. 7A.

In a case where the power cord 40 is drawn out of the left side of the battery case 10, the power cord 40 is inserted in the left guide hole 61d as shown in FIG. 7B.

As shown in FIG. 1, after the battery case 10 is attached to the upper cover 61 and the lower cover 62, when the upper belt 63a and the lower belt 63b are connected with each other, the battery case 10 gets to be held in the carrier 50.

Then, the back plate 51 of the carrier 50 with the battery case 10 comes into contact with a worker's back. Furthermore, the worker slings the left and right shoulder belts 52, 52 over his shoulders. Therefore, the worker comes to perfectly carry the shouldering type power supply device 1 on his back. Thus, the worker can carry the battery 2 (refer to FIGS. 3A, 3B) having a large capacity.

In a case where a direction of drawing out the power cord 40 is changed while keeping a state of having attached the battery case 10 to the carrier 50, the left and right fixing belts 55, 55 shown in FIGS. 7A, 7B are detached from the upper cover 61.

Then, because the upper cover 61 is tilted upward, the upper cover 61 is taken off the upper part of the battery case 10. That is, as shown in FIGS. 4A, 4B, the terminal case 30 and the power cord 40 come to be exposed, so that a direction of the power cord 40 can be changed.

Note that, the upper part of the battery case 10 is attached to the back plate 51 with the left and right drop-prevention belts 54, 54 as shown in FIGS. 6A, 6B, when the upper cover 61 (refer to FIG. 1) is taken off (is tilted upward) from the upper part of the battery case 10. Therefore, the battery case 10 is prevented from dropping off from the carrier 50.

In a case that the battery case 10 is taken out from the carrier 50 of the shouldering type power supply device 1 described above, the left and right fixing belts 55, 55 shown in FIGS. 7A, 7B are detached from the left and right side plates 61b, 61b of the upper cover 61, and then the upper case 61 is tilted upward to expose the upper part of the battery case 10.

Furthermore, the drop-prevention belts 54, 54 shown in FIGS. 6A, 6B are detached from the left and right fixing parts 25, 25 of the battery case 10, so that the battery case 10 can be taken out from the lower cover 62. Thus, the battery case 10 can be taken out from the carrier 50.

### <Structure of storage holder>

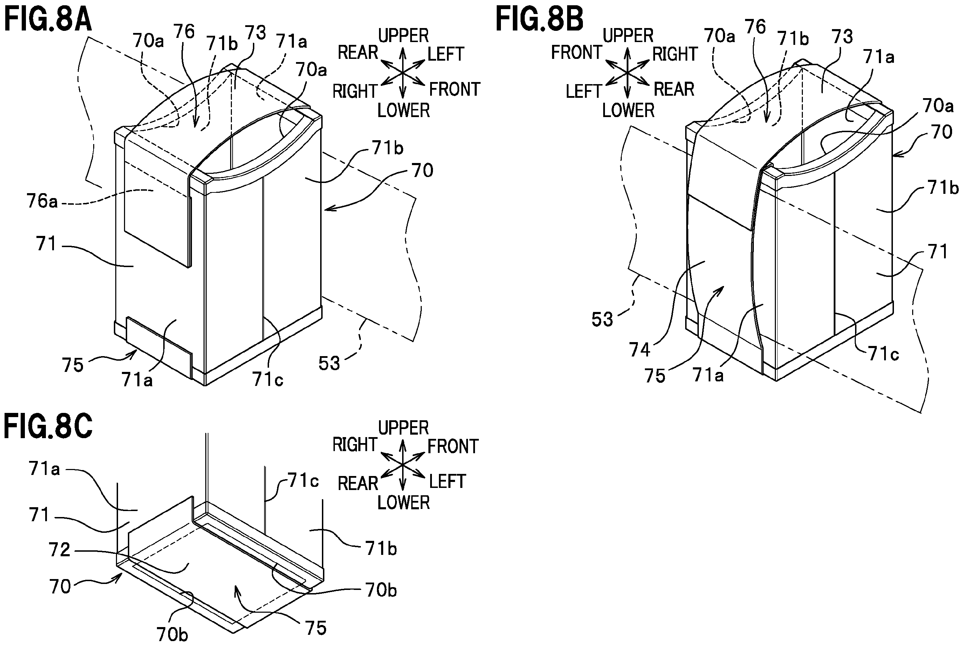

A storage holder 70 can be attached to the waist belt 53 of the shouldering type power supply device 1 of the present embodiment as shown in FIGS. 8A, 8B.

The storage holder 70 is a container for storing the terminal adapter 41 (refer to FIG. 1) detached from a working machine.

The storage holder 70 comprises a rectangular cylinder body part 71, a first belt 75 and a second belt 76 attached to the body part 71.

The body part 71 has a pair of left and right first side plates 71a, 71a and a pair of front and rear second side plates 71b, 71b. Each first side plate 71a and each second side plate 71b are made of cloth and elastic plates made from foamed polyethylene or anything like that. The plates are covered with a piece of cloth or pieces of cloth.

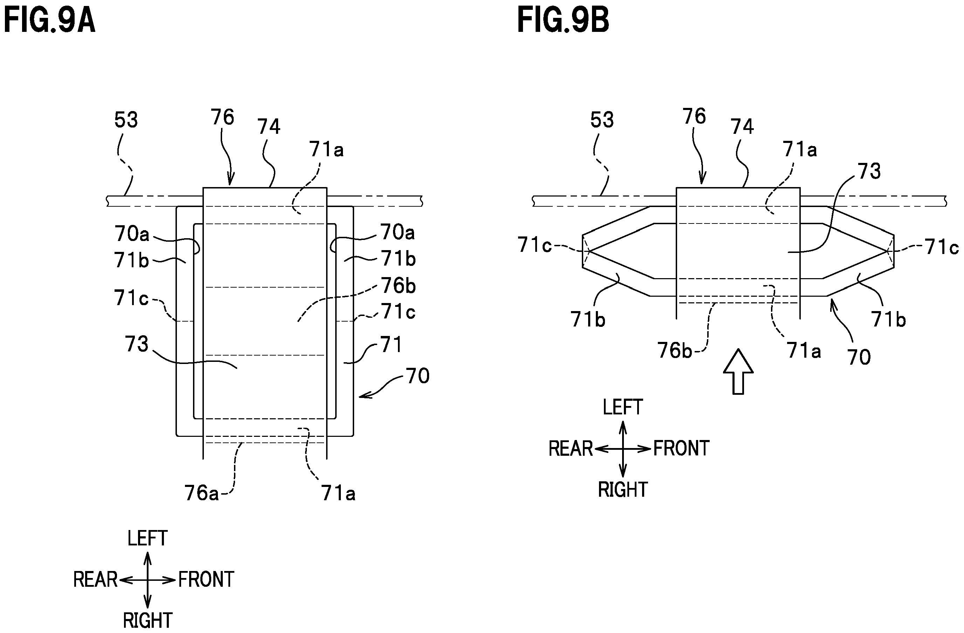

A fold line 71c extending in the upper-lower direction is formed in the middle of each second side plate 71b in the left-right direction. As shown in FIG. 9B, each second side plate 71b is made of left and right members so as to be freely folded in the left-right direction. That is, the whole body part 71 can be freely folded in the left-right direction.

The first belt 75 is a belt member made of cloth, which forms a bottom part 72 of the storage holder 70 and an attachment part 74 as shown in FIGS. 8B, 8C.

The first belt 75 is extended along a lower end part of an outer surface of the right first side plate 71a, a bottom part of the body part 71, an outer surface of the left first side plate 71a, and an upper end part of an inner surface of the left first side plate 71a.

The first belt 75 is sewed onto the lower end part of the right first side plate 71a and a lower end part of the outer surface of the left first side plate 71a.

Thus, the first belt 75 is laid between left and right edges of the bottom part of the body part 71, and forms the bottom part 72 as shown in FIG. 8C.

A width of the first belt 75 in the front-rear direction is narrower than a distance between inner surfaces of the front and rear second side plates 71b, 71b. Therefore, there are clearances between front and rear edges of the bottom part 72 and inner surfaces of the front and rear second side plates 71b, 71b. Thus, openings 70b, 70b are formed in the bottom of the storage holder 70. The openings 70b, 70b are separated from each other in the front-rear direction.

The upper end part of the first belt 75 is detachably attached to the upper end part of the inner surface of the first side plate 71a on the left side (waist belt 53 side) in a manner of hook and loop fastener as shown in FIG. 8B.

Thereby, the attachment part 74 is formed on the outer surface of the left first side plate 71a with use of the first belt 75.

The waist belt 53 is inserted between the attachment part 74 of the first belt 75 and the outer surface of the left first side plate 71a, so that the storage holder 70 can be attached to the waist belt 53. The storage holder 70 attached to the waist belt 53 can slide along the waist belt 53.

The second belt 76 is a belt member made of cloth, and forms a lid part 73 of the storage holder 70 as shown in FIG. 8A.

A left end part of the second belt 76 is sewed onto an upper end part of the first belt 75, and a right end part is detachably attached to an upper part of the outer surface of the right first side plate 71a with use of a first hook and loop fastener 76a as shown in FIG. 8A.

Thus, the second belt 76 is laid between left and right edges of the top part of the body part 71, and forms the lid part 73.

A width of the second belt 76 in the front-rear direction is the same as the width of the first belt 75 in the front-rear direction, and is shorter than the distance between the inner surfaces of the front and rear second side plates 71b, 71b. Therefore, as shown in FIG. 9A, clearances are formed between front and rear edges of the lid part 73 and the inner surfaces of the front and rear second side plates 71b, 71b. Thus, front and rear openings 70a, 70a are formed in the top of the storage holder 70.

Furthermore, a second hook and loop fastener 76b is provided on an under surface of the second belt 76 in the middle of the second belt 76 between the left and right first side plate 71a, 71a in the left-right direction.

When the terminal adapter 41 (refer to FIG. 1) is stored in the storage holder 70, the first hook and loop fastener 76a of the second belt 76 is detached from the first side plate 71a to open the lid part 73, so that the whole top of the body part 71 is opened.

After the terminal adapter 41 is put in the body part 71, the first hook and loop fastener 76a of the second belt 76 is attached to the outer surface of the first side plate 71a, so that the top of the body part 71 is closed with the lid part 73. At this time, the power cord 40 (refer to FIG. 1) is inserted in an opening 70a between the lid part 73 and either second side plate 71b.

Note that, if there is a droplet of water or a piece of trash of metal or cut material on the bottom of the storage holder 70, there is a possibility that a droplet and/or a piece of trash is adhered to a metal terminal of the terminal adapter 41 (refer to FIG. 1), so that a short circuit or a contact failure may occur.

Foreign substances such as a droplet of water, a piece of trash can be prevented from remaining in the storage holder 70 of the present embodiment because the storage holder 70 has openings 70b, 70b in the bottom thereof (or of the body part 71) as shown in FIG. 8C.

When the storage holder 70 is not used while a working machine is operated, the first hook and loop fastener 76a of the second belt 76 is detached from the body part 71, and then the body part 71 is folded in the left-right direction as shown in FIG. 9B. Furthermore, the second hook and loop fastener 76b of the second belt 76 is attached to the outer surface of the first side plate 71a, so that the body part 71 can be kept in a folded shape. When the body part 71 is folded, the bottom part 72 (refer to FIG. 8C) is also folded in the left-right direction. Thus, the body part 71 becomes compact.

Furthermore, the storage holder 70 can be moved along the waist belt 53. Thereby, the storage holder 70 can be prevented from touching a hand of the worker or neighboring members.

Note that, in the present embodiment, the storage holder 70 is attached to a right side part of the waist belt 53 as shown in FIG. 8A. But the storage holder 70 can be also attached to a left side part of the waist belt 53.

### <Operational advantage of shouldering type power supply device >

As shown in FIG. 1, the cover structure 60, which is made of cushioning or elastic members, covers the upper and lower parts of the battery case 10 as shown in FIG. 1 in the shouldering type power supply device 1 of the present embodiment described above. Therefore, the battery case 10 can be protected from the impact even if the shouldering type power supply device 1 falls to the ground. Thereby, in the shouldering type power supply device 1 of the present embodiment, the strength of the battery case 10 may be low.

Therefore, the battery case 10 can be downsized and light-weighted while improving an impact-resistant performance of the shouldering type power supply device 1 of the present embodiment.

The shouldering type power supply device 1 of the present embodiment has the cover structure 60 made of separated upper and lower cases 61, 62. Therefore, even if the shouldering type power supply device 1 falls to the ground, the upper end part and the lower end part of the battery case 10, which may receive a large impact, are efficiently protected. In the shouldering type power supply device 1 of the present embodiment, a weight and a manufacturing cost of the cover structure 60 can be reduced more than a cover structure which can cover the whole of the battery case 10.

In the shouldering type power supply device 1 of the present embodiment, the battery case 10 can be easily attached to and detached from the carrier 50 because the elastic upper cover 61 and the elastic lower cover 62 are configured to cover the upper end part and the lower end part of the battery case 10, respectively.

In the shouldering type power supply device 1 of the present embodiment, the left and right drop-prevention belts 54, 54 are attached to the upper parts of the battery case 10 as shown in FIGS. 6A, 6B. Therefore, even if the upper cover 61 is taken off the battery case 10 shown in FIG. 1, or even if the upper belt 63a and the lower belt 63b are disconnected from each other, the battery case 10 can be prevented from carelessly falling to the ground.

When the upper cover 61 covers the upper end part of the battery case 10, the left and right drop-prevention belts 54, 54 (refer to FIGS. 6A, 6B) are covered with the upper cover 61. Therefore, each drop-prevention belt 54 can be prevented from being caught by neighboring members while a worker is moving or working.

In the shouldering type power supply device 1 of the present embodiment, the upper belt 63a and the lower belt 63b can be put in the groove 21 provided on the outer surface of the battery case 10, and can be housed in a state equal to or lower than tops of the protrusions 20t1, 20t2. Therefore, the upper belt 63a and the lower belt 63b can be prevented from being caught by neighboring members while a worker is moving or working. However, in another embodiment of the present invention, a part of the upper belt 63a and/or a part of the lower belt 63b may be positioned at the groove 21 in a state higher than tops of the protrusions 20t1, 20t2.

Furthermore, even if the shouldering type power supply device 1 falls to the ground, the connected parts of the upper belt 63a and the lower belt 63b can be prevented from being broken.

The upper cover 61 of the shouldering type power supply device 1 of the present embodiment is made of an elastic material. Therefore, even if the shouldering type power supply device 1 falls to the ground, the impact to the terminal case 30 (refer to FIG. 3A) and the power cord 40 can be reduced by the upper cover 61. That is, the terminal case 30 and the power cord 40 can be prevented from being damaged.

In the shouldering type power supply device 1 of the present embodiment, when the upper cover 61 (refer to FIG. 1) is taken off (tilted upward) from the battery case 10, the terminal case 30 is exposed as shown in FIGS. 6A, 6B. And the power cord 40 is detached from between one guide part 32 and the top surface 20c of the case body 20, then the power cord 40 is held between the other guide part 32 and the top surface 20c of the case body 20, and then the upper part of the battery case 10 is covered with the upper cover 61. Thus, a direction for the power cord 40 to be drawn out can be easily changed without using tools.

In the shouldering type power supply device 1 of the present embodiment, as shown in FIGS. 7A, 7B, the power cord 40 can be straightly extended outside through a guide hole 61d out of the upper cover 61, so that the power cord 40 is easily drawn out of the upper cover 61.

Furthermore, when the upper cover 61 is tilted upward, front edge parts of both side plates 61b, 61b leave the rear surface 51b of the back plate 51, so that both the guide holes 61d, 61d are opened. Therefore, the power cord 40 can be easily inserted in or taken out from each guide hole 61d.

Each guide hole 61d of the shouldering type power supply device 1 of the present embodiment is an opening defined by the upper cover 61, the back plate 51 and the corresponding fixing belt 55. Therefore, the power cord 40 inserted in each guide hole 61d becomes stable.

### <Other embodiments>

The embodiment of the present invention has been described above. However, the present invention is not limited to the embodiment, and can be modified within the range not deviating from the object of the present invention.

For example, a shape of the battery case 10 is not limited to the embodiment, and various shapes of a battery case like a cylindrical shape can be adopted. In such cases, an upper cover and a lower cover are formed so as to match an upper part and a lower part of each of the various shapes of a battery case.

In the shouldering type power supply device 1 of the present embodiment, as shown in FIG. 1, the upper part and the lower part of the battery case 10 is covered with the upper cover 61 and the lower cover 62, respectively. Each area of the battery case 10, which is covered with the upper cover 61 or the lower cover 62, is not limited. A height and a thickness of each of the upper cover 61 and the lower cover 62 are determined considering an impact-absorption performance and/or easiness of attaching to and detaching from the battery case 10.

The shouldering type power supply device 1 of the present embodiment is provided with the waist belt 53 other than the left and the right shoulder belts 52, 52. However, the waist belt 53 has not to be necessarily provided.

In the present embodiment, as shown in FIG. 4A, the cord hole 31 and both the guide parts 32, 32 are formed in or on the front surface 30a of the terminal case 30. However, the cord hole 31 and both the guide parts 32, 32 may be formed in or on the rear surface of the terminal case 30.

In the present embodiment, as shown in FIG. 4A, the plug type connectors 2a, 42 are housed in the terminal case 30. However, the power cord 40 may be electrically connected to the control circuit in the battery case 10 with use of a terminal like a bus bar.

### DESCRIPTION OF REFERENCE NUMERALS

- 1: Shouldering type power supply device
- 2: Battery
- 2a: Battery connector
- 10: Battery case
- 20: Case body
- 21: Groove
- 22: Recessed part
- 23: Switch
- 24: Display panel
- 25: Fixing part
- 26: Fixing groove
- 30: Terminal case
- 31: Cord hole
- 32: Guide part
- 40: Power cord
- 41: Terminal adapter
- 42: Cord connector
- 50: Carrier
- 51: Back plate
- 52: Shoulder belt
- 53: Waist belt
- 54: Drop-prevention belt
- 55: Fixing belt
- 60: Cover structure
- 61: Upper cover
- 61d: Guide hole
- 62: Lower cover
- 63a: Upper belt
- 63b: Lower belt
- 70: Storage holder
- 71: Body part
- 71a: First side plate
- 71b: Second side plate
- 72: Bottom part
- 73: Lid part
- 74: Attachment part
- 75: First belt
- 76: Second belt

## Claims

1. A shouldering type power supply device (1) for supplying electric power to a working machine, the device comprising:
a battery case (10) housing a battery (2); a power cord (40) for detachably electrically connecting the battery and the working machine to supply the electric power to the working machine from the battery; and
a carrier (50) to which the battery case is detachably attached,
wherein the carrier comprises:
a back plate (51); and
a shoulder belt (52) that is coupled to the back plate,
wherein the battery case comprises:
a case body (20) that houses the battery; and
a terminal case (30) that is attached on a top surface (20c) of the case body, the terminal case being made of plastic,
wherein the terminal case has a cord hole (31) having an opening at a front side, a right guide part (32) disposed on a right side of the cord hole and protruding forward and a left guide part (32) disposed on a left side of the cord hole and protruding forward, and
wherein the power cord (40) has an end part detachably connected to the battery, the power cord extending forward through the cord hole and being bent to either the right side or the left side at a front of the cord hole and held between one of the guide parts and the top surface of the case body, and the power cord being capable of being taken out from between the one of the guide parts and the top surface of the case body through a gap between an undersurface of the one of the guide parts and a front end of the top surface of the case body.

2. The shouldering type power supply device according to claim 1,
wherein the carrier further comprises a cover structure (60) that is coupled to the back plate to cover the battery case with the cover structure.

3. The shouldering type power supply device according to claim 2,
wherein the cover structure has an upper cover (61) that covers an upper part of the battery case and a lower cover (62) that covers a lower part of the battery case, and the upper cover is made of an elastically-deformable body.

4. The shouldering type power supply device according to claim 3,
wherein the cover structure is attached on a rear surface of the back plate,
wherein the upper cover has a top plate (61a), a rear plate (61c) that is connected to a rear edge part of the top plate, and right and left side plates (61b, 61b) that are connected to right and left edge parts of the top plate,
wherein a front edge part of the top plate is attached on the rear surface of the back plate,
wherein right and left guide holes (61d, 61d) are defined between front edge parts of the respective side plates of the upper cover and the rear surface of the back plate, and
wherein the power cord is inserted through one of the guide holes.

5. The shouldering type power supply device according to claim 4,
wherein a fixing belt (55) is arranged on the back plate,
wherein the fixing belt is detachably attached on an outer surface of one of the side plates of the upper cover, and
wherein each of the guide holes is located above the fixing belt and is an opening defined by the upper cover, the back plate and the fixing belt.

## Patentansprüche

1. Eine Stromversorgungsvorrichtung zum Schultern (1) zur Versorgung einer Arbeitsmaschine mit Strom, wobei die Vorrichtung Folgendes umfasst:
ein Batteriegehäuse (10), in dem eine Batterie (2) aufgenommen ist; ein Anschlusskabel (40) zur abnehmbaren elektrischen Verbindung der Batterie und der Arbeitsmaschine, um die Arbeitsmaschine über die Batterie mit Strom zu versorgen; und
einen Träger (50), an dem das Batteriegehäuse abnehmbar befestigt ist,
wobei der Träger Folgendes umfasst:
eine Rückplatte (51); und
einen Schultergurt (52), der an die Rückplatte gekoppelt ist,
wobei das Batteriegehäuse Folgendes umfasst:
einen Gehäusekörper (20), in dem die Batterie aufgenommen ist; und
ein Anschlussgehäuse (30), das an einer oberen Fläche (20c) des Gehäusekörpers befestigt ist, wobei das Anschlussgehäuse aus Kunststoff besteht,
wobei das Anschlussgehäuse ein Kabelloch (31) mit einer Öffnung an einer Vorderseite, einen rechten Führungsteil (32), der an einer rechten Seite des Kabellochs angeordnet ist und nach vorn hervorsteht, und einen linken Führungsteil (32), der an einer linken Seite des Kabellochs angeordnet ist und nach vorn hervorsteht, aufweist und
wobei das Anschlusskabel (40) einen Endteil aufweist, der abnehmbar mit der Batterie verbunden ist, wobei das Anschlusskabel vorwärts durch das Kabelloch verläuft und entweder zur rechten Seite oder zur linken Seite an einer Vorderseite des Kabellochs gebogen wird und zwischen einem der Führungsteile und der oberen Fläche des Gehäusekörpers gehalten wird, und wobei das Anschlusskabel zwischen dem einen der Führungsteile und der oberen Fläche des Gehäusekörpers durch einen Spalt zwischen einer unteren Fläche des einen der Führungsteile und einem vorderen Ende der oberen Fläche des Gehäusekörpers herausgenommen werden kann.

2. Die Stromversorgungsvorrichtung zum Schultern nach Anspruch 1,
wobei der Träger weiter eine Abdeckkonstruktion (60) umfasst, die an die Rückplatte gekoppelt ist, um das Batteriegehäuse mit der Abdeckkonstruktion abzudecken.

3. Die Stromversorgungsvorrichtung zum Schultern nach Anspruch 2,
wobei die Abdeckkonstruktion eine obere Abdeckung (61) aufweist, die einen oberen Teil des Batteriegehäuses bedeckt, und eine untere Abdeckung (62), die einen unteren Teil des Batteriegehäuses bedeckt, und wobei die obere Abdeckung aus einem elastisch verformbaren Material besteht.

4. Die Stromversorgungsvorrichtung zum Schultern nach Anspruch 3,
wobei die Abdeckkonstruktion an einer hinteren Fläche der Rückplatte befestigt ist,
wobei die obere Abdeckung eine obere Platte (61a), eine hintere Platte (61c), die mit einem Hinterkantenteil der oberen Platte verbunden ist, und rechte und linke Seitenplatten (61b, 61b), die mit den rechten und linken Kantenteilen der oberen Platte verbunden sind, aufweist,
wobei ein Vorderkantenteil der oberen Platte an der hinteren Fläche der Rückplatte befestigt ist,
wobei rechte und linke Führungslöcher (61d, 61d) zwischen Vorderkantenteilen der jeweiligen Seitenplatten der oberen Abdeckung und der hinteren Fläche der Rückplatte ausgebildet sind, und
wobei das Anschlusskabel durch eines der Führungslöcher eingeführt wird.

5. Die Stromversorgungsvorrichtung zum Schultern nach Anspruch 4,
wobei ein Befestigungsgurt (55) an der Rückplatte angeordnet ist,
wobei der Befestigungsgurt abnehmbar an einer Außenfläche einer der Seitenplatten der oberen Abdeckung befestigt ist, und
wobei sich jedes der Führungslöcher über dem Befestigungsgurt befindet und wobei es sich um eine Öffnung handelt, die durch die obere Abdeckung, die Rückplatte und den Befestigungsgurt ausgebildet wird.

## Revendications

1. Un dispositif d'alimentation électrique de type port sur les épaules (1) destiné à la fourniture d'une alimentation électrique à une machine de travail, le dispositif comprenant :
un boîtier pour batterie (10) logeant une batterie (2), un cordon électrique (40) destiné à raccorder électriquement de manière détachable la batterie et la machine de travail de façon à fournir l'alimentation électrique à la machine de travail à partir de la batterie, et
un support (50) auquel le boîtier pour batterie est rattaché de manière détachable,
où le support comprend :
une plaque arrière (51), et
un baudrier (52) qui est couplé à la plaque arrière,
où le boîtier pour batterie comprend :
un corps de boîtier (20) qui loge la batterie, et
un boîtier pour bornes (30) qui est rattaché sur une surface supérieure (20c) du corps de boîtier, le boîtier pour bornes étant en plastique,
où le boîtier pour bornes possède un orifice pour cordon (31) possédant une ouverture au niveau d'un côté avant, une partie guide droite (32) disposée sur un côté droit de l'orifice pour cordon et faisant saillie vers l'avant et une partie guide gauche (32) disposée sur un côté gauche de l'orifice pour cordon et faisant saillie vers l'avant, et
où le cordon électrique (40) possède une partie d'extrémité raccordée de manière détachable à la batterie, le cordon électrique s'étendant vers l'avant au travers de l'orifice pour cordon et étant plié vers soit le côté droit ou le côté gauche au niveau d'une face avant de l'orifice pour cordon et maintenu entre une des parties guides et la surface supérieure du corps de boîtier, et le cordon électrique pouvant être extrait d'entre ladite une des parties guides et la surface supérieure du corps de boîtier au travers d'un espace entre une sous-face de ladite une des parties guides et une extrémité avant de la surface supérieure du corps de boîtier.

2. Le dispositif d'alimentation électrique de type port sur les épaules selon la Revendication 1,
où le support comprend en outre une structure de couverture (60) qui est couplée à la plaque arrière de façon à recouvrir le boîtier pour batterie avec la structure de couverture.

3. Le dispositif d'alimentation électrique de type port sur les épaules selon la Revendication 2,
où la structure de couverture possède un couvercle supérieur (61) qui recouvre une partie supérieure du boîtier pour batterie et un couvercle inférieur (62) qui recouvre une partie inférieure du boîtier pour batterie, et le couvercle supérieur est composé d'un corps élastiquement déformable.

4. Le dispositif d'alimentation électrique de type port sur les épaules selon la Revendication 3,
où la structure de couverture est rattachée sur une surface arrière de la plaque arrière,
où le couvercle supérieur possède une plaque supérieure (61a), une plaque arrière (61c) qui est raccordée à une partie bord arrière de la plaque supérieure, et des plaques latérales gauche et droite (61b, 61b) qui sont raccordées à des parties bords gauche et droit de la plaque supérieure,
où une partie bord avant de la plaque supérieure est rattachée sur la surface arrière de la plaque arrière,
où des trous guides gauche et droit (61d, 61d) sont définis entre des parties bord avant des plaques latérales respectives du couvercle supérieur et la surface arrière de la plaque arrière, et
où le cordon électrique est inséré au travers d'un des trous guides.

5. Le dispositif d'alimentation électrique de type port sur les épaules selon la Revendication 4,
où une courroie de fixation (55) est agencée sur la plaque arrière,
où la courroie de fixation est rattachée de manière détachable sur une surface extérieure d'une des plaques latérales du couvercle supérieur, et
où chacun des trous guides se situe au dessus de la courroie de fixation et est une ouverture définie par le couvercle supérieur, la plaque arrière et la courroie de fixation.
